(19) **Europäisches Patentamt**
**European Patent Office**
**Office européen des brevets**

(11) **EP 4 615 132 A1**

(12) **EUROPEAN PATENT APPLICATION**
published in accordance with Art. 153(4) EPC

(43) Date of publication:
**10.09.2025 Bulletin 2025/37**

(21) Application number: **23884593.7**

(22) Date of filing: **17.10.2023**

(51) International Patent Classification (IPC):
***H04W 74/00*** (2009.01)

(52) Cooperative Patent Classification (CPC):
**H04W 74/00; H04W 74/0833**

(86) International application number:
**PCT/CN2023/124907**

(87) International publication number:
**WO 2024/093661 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 CN 202211350497**

(71) Applicants:
• **CHINA MOBILE COMMUNICATION CO., LTD
RESEARCH INSTITUTE
Beijing 100053 (CN)**

• **CHINA MOBILE COMMUNICATIONS GROUP CO.,
LTD.
Beijing 100032 (CN)**

(72) Inventors:
• **XU, Xiaodong
Beijing 100053 (CN)**
• **ZHENG, Yi
Beijing 100053 (CN)**

(74) Representative: **Novagraaf Technologies
Bâtiment O2
2, rue Sarah Bernhardt
CS90017
92665 Asnières-sur-Seine Cedex (FR)**

(54) **RANDOM ACCESS METHOD AND APPARATUS, RELATED DEVICE, AND STORAGE MEDIUM**

(57) The present application discloses a random access method and apparatus, a terminal, a network device, and a storage medium. The method comprises: a terminal acquires first information, the first information indicating at least one of the following: a first resource set and/or a second resource set, wherein the first resource set is configured to send at least two preambles on at least two occasions by the terminal, the at least two preambles sent on the at least two occasions being associated with one terminal, and the second resource set is configured to send at least two preambles on one occasion by the terminal, the at least two preambles sent on the occasion being associated with one terminal; and the number of preamble transmissions.

Option 1, transmission to a
single base station or TRP

Option 2, transmission to
multiple base stations or TRPs

**FIG. 2**

**Description**

CROSS-REFERENCE TO RELATED APPLICATION

This application is based on and claims priority to Chinese patent No. 202211350497.0 filed on October 31, 2022, the contents of which are hereby incorporated by reference in by its entirety.

TECHNICAL FIELD

The disclosure relates to the field of wireless communications, and in particular to a method and apparatus for random access, a related device and a storage medium.

BACKGROUND

A terminal realizes downlink synchronization by receiving and measuring a synchronization signal block (SSB), and transmits a preamble in an uplink random access channel (RACH) occasion (RO occasion) corresponding to the SSB to perform uplink random access.
However, in the related art, there is no effective solution at present to how to enhance a random access procedure to improve an access success rate of the terminal and to shorten an access delay.

SUMMARY

In order to solve the relevant technical problem, embodiments of the disclosure provide a method and apparatus for random access, a related device and a storage medium.
The technical solution of the embodiments of the disclosure is implemented as follows.
Embodiments of the disclosure provide a method for random access, applied to a terminal and including: acquiring first information. The first information indicates at least one of following: a first resource set and/or a second resource set; and a number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.
In the above scheme, acquiring the first information includes: receiving the first information transmitted from a network side.
In the above scheme, the method further includes: receiving second information from a network side, wherein the second information includes at least one piece of timing advance (TA) information.
In the above scheme, in a case that the first information indicates at least the first resource set, the at least two preambles transmitted on the at least two occasions are same or different.
In the above scheme, in a case that the first information indicates at least the first resource set and the number of preamble transmissions, a number of preamble transmissions does not exceed the indicated number of preamble transmissions when the at least two preambles transmitted are same; or in the case that the first information indicates at least the first resource set and the number of preamble transmissions, a number of transmissions of each preamble does not exceed the indicated number of preamble transmissions when the at least two preambles transmitted are different.
In the above scheme, in a case that the first information indicates at least the first resource set, the at least two occasions are consecutive.
In the above scheme, in a case that the first information indicates at least the first resource set and the at least two preambles transmitted are different, the at least two preambles transmitted on the at least two occasions have an association relationship with each other.
In the above scheme, in a case that the first information indicates at least the first resource set, time-domain resources or frequency-domain resources of the at least two occasions are different, or, time-domain resources of the at least two occasions are same and frequency-domain resources of the at least two occasions are different. Resources of the at least two occasions have an association relationship with each other.
In the above scheme, in a case that the first information indicates at least the second resource set, the at least two preambles transmitted on the one occasion have an association relationship with each other.
In the above scheme, the method further includes: selecting a first preamble from the second resource set; and selecting a second preamble based on a rule.
In the above scheme, in a case that the first information indicates the second resource set and the number of preamble transmissions, a number of transmissions of each preamble does not exceed the indicated number of preamble transmissions.
In the above scheme, the occasion(s) has a correspondence relationship with identifier(s) of signal(s) at least used for synchronization.
Embodiments of the disclosure further provide a method for random access, applied to a network device and including: transmitting first information to a terminal. The first information indicates at least one of following: a first resource set and/or a second resource set; and a number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

In the above scheme, the method further includes: transmitting second information to the terminal, wherein the second information includes at least one piece of timing advance (TA) information.

In the above scheme, the method further includes: in a case that the first information indicates at least the first resource set, receiving at least two preambles on at least two occasions, wherein the at least two preambles received on the at least two occasions are same or different.

In the above scheme, in a case that the first information indicates at least the first resource set, the at least two occasions are consecutive.

In the above scheme, the method further includes: in a case that the first information indicates at least the first resource set, receiving at least two preambles on at least two occasions, wherein at least two different preambles received on at least two occasions have an association relationship with each other.

In the above scheme, in a case that the first information indicates at least the first resource set, time-domain resources or frequency-domain resources of the at least two occasions are different, or, time-domain resources of the at least two occasions are same and frequency-domain resources of the at least two occasions are different. Resources of the at least two occasions have an association relationship with each other.

In the above scheme, in a case that the first information indicates at least the second resource set, receiving at least two preambles on one occasion, wherein the at least two preambles received on the one occasion have an association relationship with each other.

In the above scheme, determining, based on the at least two preambles received, that at least two pieces of TA information are needed to be used, wherein each piece of TA information corresponds to uplink transmission of a respective beam.

In the above scheme, the occasion(s) corresponds to identifier(s) of signal(s) at least used for synchronization.

Embodiments of the disclosure further provide an apparatus for random access, arranged in a terminal and including: an acquisition unit, configured to acquire first information, wherein the first information indicates at least one of following: a first resource set and/or a second resource set; and a number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

Embodiments of the disclosure further provide an apparatus for random access, arranged in a network device and including: a transmission unit, configured to transmit first information to a terminal, wherein the first information indicates at least one of following: a first resource set and/or a second resource set; and a number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

Embodiments of the disclosure further provide a terminal, including a first processor and a first communication interface, wherein: the first processor is configured to acquire first information, wherein the first information indicates at least one of following: a first resource set and/or a second resource set; and a number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

Embodiments of the disclosure further provide a network device, including a second processor and a second communication interface, wherein: the second communication interface is configured to transmit first information to a terminal, wherein the first information indicates at least one of following: a first resource set and/or a second resource set; and a number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

Embodiments of the disclosure further provide a terminal, including a first processor and a first memory configured to store a computer program capable of being run by the first processor; wherein the first processor is configured to run the computer program to implement the steps of any above method of a terminal side.

Embodiments of the disclosure further provide a network device, including a second processor and a second memory configured to store a computer program capable of being run by the second processor; wherein the second processor is configured to run the computer program to implement the steps of any above method of a network device side.

Embodiments of the disclosure further provide a storage medium stored with a computer program, wherein the computer program, when executed by a processor, implements steps of any above method of a terminal side, or implements steps of any above method of a network device side.

Embodiments of the disclosure provide a method and apparatus for random access, a related device and a storage medium. In the method of the embodiments of the disclosure, a terminal acquires first information. The first information indicates at least one of following: a first resource set and/or a second resource set; and a number of preamble transmissions. The first resource set is used for the terminal to transmit at least two preambles on at least two occasions. The at least two preambles transmitted on the at least two occasions are associated with one terminal. The second resource set is used for the terminal to transmit at least two preambles on one occasion. The at least two preambles transmitted on the one occasion are associated with one terminal. In the scheme according to the embodiments of the disclosure, the terminal obtains indication information, and the network side can learn that multiple preambles transmitted by the terminal are from the same user according to the indication information; in this way, since one terminal transmits multiple preambles, the coverage capability of a PRACH is improved (namely the random access capability of the PRACH is improved), the access success rate of the terminal is improved, and the access delay is shortened.

BRIEF DESCRIPTION OF THE DRAWINGS

FIG. 1 illustrates a flowchart of a random access procedure.
FIG. 2 illustrates a schematic diagram of a communication mode between a multi-panel terminal and a base station.
FIG. 3 illustrates a schematic flowchart of a method for random access according to embodiments of the disclosure.
FIG. 4 illustrates a schematic diagram of consecutive RACH occasions (ROs) according to embodiments of the disclosure.
FIG. 5 illustrates another schematic diagram of consecutive RACH occasions (ROs) according to embodiments of the disclosure.
FIG. 6 illustrates a schematic flowchart of another method for random access according to embodiments of the disclosure.
FIG. 7 illustrates a schematic structural diagram of an apparatus for random access according to embodiments of the disclosure.
FIG. 8 illustrates a schematic structural diagram of another apparatus for random access according to embodiments of the disclosure.
FIG. 9 illustrates a schematic structural diagram of a terminal according to embodiments of the disclosure.
FIG. 10 illustrates a schematic structural diagram of a network device according to embodiments of the disclosure.
FIG. 11 illustrates a schematic structural diagram of a system for random access according to embodiments of the disclosure.

DETAILED DESCRIPTION

The disclosure is further described in detail in conjunction with the accompanying drawings and embodiments.

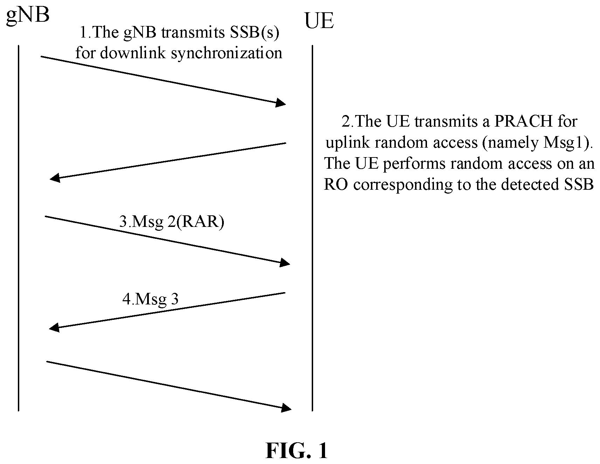

As illustrated in FIG. 1, a base station transmits synchronization signal block(s) (SSB(s)) to a terminal for downlink synchronization. The terminal realizes downlink synchronization by measuring the SSB, and transmits a preamble in an RO corresponding to the SSB, so as to perform random access. Since there is a correspondence relationship between RO(s) and SSB index(es), the base station receives, on an RO corresponding to a certain SSB, a preamble by using a beam in the same direction as the SSB, so as to ensure that the uplink preamble transmitted by the terminal can be correctly received. Here, transmitting the preamble may also be understood as transmitting a physical random access channel (PRACH), and correspondingly, receiving the preamble may also be understood as receiving the PRACH.

At the same time, in the related art, it is proposed to enhance the coverage of a PRACH, such as multiple transmissions of the PRACH using the same beam (which may also be understood as the same direction) and multiple transmissions of the PRACH in multiple directions (which may also be understood as multiple beams).

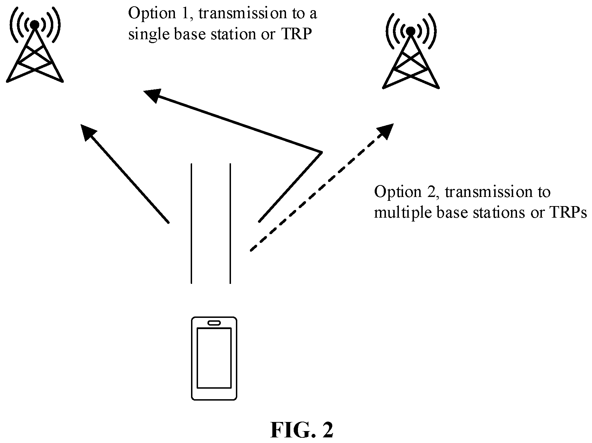

On the other hand, in order to solve the transmission and reception of the terminal in millimeter waves or a higher frequency band, as illustrated in FIG. 2, multiple panels are configured on the terminal for reception and transmission. The introduction of multiple panels can effectively improve the terminal's capability in receiving downlink signals and the capability in transmitting uplink signals. Especially in some industrial scenarios, the volume of the terminal is not limited, and more panels can be configured for the terminal to obtain a higher transmission rate or to improve transmission reliability.

However, in the related art, only the basic idea of multiple transmissions of the PRACH is proposed, and there is yet no effective solution to how to realize multiple transmissions of the PRACH specifically.

Based on this, in various embodiments of the disclosure, the terminal obtains indication information, and the network side (specifically, a base station (which may also be understood as a Transmit/Receive Point (TRP)) can learn that multiple preambles transmitted by the terminal are from the same user according to the indication information; as such, since one terminal transmits multiple preambles, which may specifically be that, one terminal transmits multiple preambles in one random access procedure, the coverage capability of a PRACH is improved, the access success rate of the terminal is improved, and the access delay is shortened.

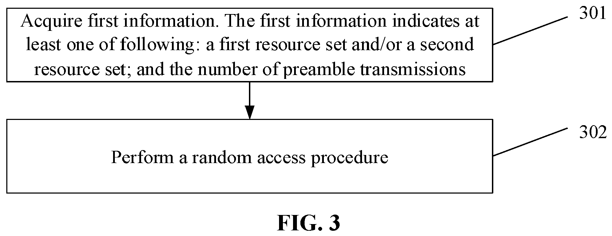

Embodiments of the disclosure provide a method for random access, which may also be understood as a method for processing random access information. The method is applied to a terminal. As illustrated in FIG. 3, the method includes following.

At 301, first information is acquired. The first information indicates at least one of following: a first resource set and/or a second resource set; and a number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

In practical applications, the terminal may be referred to as user equipment (UE), or may be referred to as a terminal device, a user or the like.

In practical applications, the first information may be pre-defined in advance. As such, the terminal acquires the pre-defined first information. The first information may also be configured (may also be understood as predefined) by the network side, and the terminal obtains the first information by receiving the first information from the network side. The network side may configure the first information for the terminal through a broadcast message or a system information (which can be understood as indicating the first information for the terminal), for example, the first information is configured for the terminal through a system information block 1 (SIB1), and the specific process of how the network side transmits the first information is not limited the embodiments of the disclosure.

The first resource set contains at least one first resource. Therefore, the first information indicating the first resource set may be understood as the first information indicating at least one first resource, and the first resource set being used for the terminal to transmit at least two preambles on at least two occasions may be understood as the at least one first resource being used for the terminal to transmit at least two preambles on at least two occasions, which may specifically be the at least one first resource being used for the terminal to transmit at least two preambles on at least two occasions in a random access procedure. Correspondingly, the second resource set contains at least one second resource. Therefore, the first information indicating the second resource set may be understood as the first information indicating at least one second resource, and the second resource set being used for the terminal to transmit at least two preambles on one occasion may be understood as the at least one second resource being used for the terminal to transmit at least two preambles on one occasion, which may specifically be the at least one second resource being used for the terminal to transmit at least two preambles on one occasion in a random access procedure.

In practical applications, the resource(s) contained in the resource set(s) may be understood as random access resource(s), and includes, for example, at least one of: preamble, time-frequency resource for transmitting preamble (which may also be referred to as a time-frequency resource for PRACH transmission), and RO. That is to say, the resource(s) contained in the resource set may include occasion(s) and/or preamble(s). The first resource set and the second resource set may be understood as designated resource sets, so that the network side can learn that multiple received preambles are transmitted by one terminal.

Here, in a case that the resource set contains only an occasion, the terminal may transmit preamble(s) using the occasion(s) contained in the resource set, so that the network side can learn that multiple received preambles are transmitted by one terminal. In this case, the terminal may select a preamble as needed. In a case that the resource set contains only preamble(s), the terminal may transmit preamble(s) contained in the resource set, so that the network side can learn that multiple received preambles are transmitted by one terminal. In this case, the terminal may determine occasion(s) for transmitting the preamble(s) as needed. Of course, when the resource set contains occasion(s) and preamble(s), the terminal may use occasion(s) contained in the resource set to transmit preamble(s) contained in the resource set. The specific implementation process of how the terminal selects preamble(s) as needed and how the terminal determines the occasion(s) to transmit the preamble(s) as needed is not limited, as long as the network side can learn that the multiple received preambles are transmitted by one terminal.

In practical applications, the occasion may include a transmission occasion, a random access occasion, a PRACH occasion, an RO or a time unit (which may also be referred to as a time resource, such as a time slot), or a resource for transmitting or receiving a PRACH (which may also be understood as a preamble) (that is, a time-frequency resource related to random access), which is not limited in the embodiments of the disclosure, as long as the function(s) thereof is implemented.

The number of preamble transmissions refers to the number of times each preamble is transmitted, which may specifically be the number of times each preamble is transmitted in a random access procedure, and may be understood as a maximum number of transmissions. The number of preamble transmissions may be understood as a maximum number of preamble transmissions supported by the network side.

Here, in the related art, the random access procedure includes transmission of one preamble (or transmission of one PRACH) and a random access response (RAR). In a random access procedure, a terminal transmits a preamble. The terminal transmits the second preamble only when the random access procedure fails (it may be understood that the terminal receives no random access response). In this case, the network side will consider that the two preambles transmitted by the one terminal are from two terminals. In the embodiments of the disclosure, one terminal transmits at least two preambles. Specifically, the terminal transmits multiple preambles in one random access procedure; and from the perspective of the network side, after receiving one or more preambles transmitted by the terminal, determining that the preamble(s) transmitted by the terminal is correctly received, that is, the network side considers that the transmission of the multiple preambles is random access by one terminal. It may be understood that one random access procedure may also be referred to as one random access request or one random access attempt, which is not limited in the embodiments of the disclosure.

In practical applications, the terminal may initiate a random access procedure after acquiring the first information.

On this basis, in an embodiment, as illustrated in FIG. 3, the method may further include following.

Step 302, a random access procedure is performed.

The terminal performs a random access procedure using the first information. That is, the terminal performs a random access procedure using a corresponding resource within the resource indicated by the first information. In the random access procedure, the terminal receives second information from a network side. The second information includes at least one piece of timing advance (TA) information. Here, in practical applications, the network side can learn that at least two received preambles are from one terminal according to the first information. Further, the network side can learn whether the terminal has at least two panels, and determine whether there is a propagation delay (which may also be understood as a transmission delay, a propagation time difference, or a propagation delay offset) in the transmission of the at least two panels according to the received preambles. The network side transmits at least two pieces of TA information to the terminal if there is a propagation delay, and transmits one piece of TA information to the terminal if there is no propagation delay. Here, in practical applications, for a multi-panel terminal, the terminal can learn whether there is a propagation delay in the transmission of at least two panels by measuring signal(s) at least used for synchronization sent from the network side. If there is a propagation delay, the terminal may request or instruct configuring at least two pieces of TA information from the network side (that is, at least two panels transmit different preambles), and the network side can also learn that there is a propagation delay in the transmission of the at least two panels after receiving the request of the terminal, so as to transmit two pieces of TA information to the terminal. If there is no propagation delay, the terminal may request or instruct configuring one piece of TA information from the network side, and the network side can also learn that there is no propagation delay in the transmission of the at least two panels after receiving the request of the terminal, so as to transmit one piece of TA information to the terminal. Of course, when there is no propagation delay, the terminal may send no request to the network side, meaning that there is no propagation delay in the transmission of the at least two panels by default.

In practical applications, each piece of TA information may contain a TA value, and may also contain a validity duration of the TA value, and etc., which is not limited in the embodiments of the disclosure.

In the embodiments of the disclosure, the occasion(s) has an association relationship with identifier(s) of signal(s) at least used for synchronization. In practical applications, the signal(s) at least used for synchronization may include a synchronization signal block (SSB) and/or a channel state information reference signal (CSI-RS). The identifier may include an index of the signal, which is not limited in the embodiments of the disclosure.

In an embodiment, in a case that the first information indicates at least the first resource set, the at least two preambles transmitted on the at least two occasions may be the same or different; but in any case, when the terminal transmits the at least two preambles using resource(s) in the first resource set, the network side would consider that the at least two preambles transmitted on the at least two occasions are preambles from the same terminal.

In practical applications, the terminal may transmit the at least two preambles using one panel as needed; and of course, when the terminal has at least two panels, the terminal may transmit the at least two preambles using at least two panels. When at least two same preambles are transmitted using at least two panels, for example, when the terminal learns that there is no propagation delay in the transmission of the at least two panels based on the measurements for the received at least two signals at least used for synchronization, the terminal may transmit at least two same preambles using the at least two panels. Thus, an additional energy gain, as well as a spatial diversity gain of beams (since the preambles are from at least two panels, i.e. from different directions, the probability of being blocked is reduced) can be obtained. When at least two different preambles are transmitted using at least two panels, for example, when the terminal learns that there is a propagation delay in the transmission of the at least two panels based on the measurements for the received at least two signal at least used for synchronization, the terminal may transmit at least two different preambles using the at least two panels. Thus, a power gain (the network device may combine related results of the at least two preambles, to improve the detection probability), as well as a spatial diversity gain of different beam directions can be obtained; and there are more opportunities of detection than an ordinary terminal.

Here, when the terminal transmits at least two same preambles, the number of preamble transmissions does not exceed the number of preamble transmissions indicated by the first information. Exemplarily, assuming that the terminal uses a preamble 1, and the first information indicates that the number of transmissions of the preamble 1 is M, if the terminal transmits the preamble 1 for L times in an access procedure, L must be less than or equal to M. M and L are both integers greater than zero.

When the terminal transmits at least two different preambles, the number of transmissions of each preamble (which may be understood as the number of repetitions) does not exceed the indicated number of preamble transmissions. Exemplarily, assuming that the terminal uses a preamble 1 and a preamble 2, and the first information indicates that the numbers of transmissions of the preamble 1 and the preamble 2 are both M, the number of times that the terminal transmits the preamble 1 cannot exceed M, and the number of times that the terminal transmits the preamble 2 cannot exceed M.

In practical applications, when the terminal transmits at least two different preambles, the at least two preambles transmitted on the at least two occasions may have an association relationship with each other, thus the difficulty in detecting the preambles can be reduced for the network side. The association relationship can characterize that the at least two different preambles are from one terminal.

Here, when selecting preambles, the terminal may firstly select a preamble from the first resource set, and then select another preamble according to a rule. The selected another preamble may or may not be a preamble in the first resource set.

Based on this, in an embodiment, the terminal selects a third preamble from the first resource set, and selects a fourth preamble based on a rule. The fourth preamble may be a preamble in the first resource set, namely, the terminal selects the fourth preamble from the first resource set based on the rule; and the fourth preamble may not be a preamble in the first resource set. Exemplarily, the rule may be a $k^{th}$ sequence of multiple preambles (i.e., the $k^{th}$ preamble) $P(k) = P1 + N_k$, or $P(k) = P(k-1) + N'_k$. P1 denotes a first sequence number or sequence index among the multiple preambles, that is, the third preamble. $N_k$ denotes the offset between the $k^{th}$ sequence and the first sequence. $P(k-1)$ denotes the $(k-1)^{th}$ sequence number or sequence index among the multiple preambles. $N'_k$ denotes the offset between the $k^{th}$ sequence and the $(k-1)^{th}$ sequence. By selecting the $N_k$ and $N'_k$, there may be better non-correlation among the k sequences. As such, on one hand, the correlation among the k sequences can be reduced, reducing the interference between the sequences and improving the detection probability; on the other hand, the difficulty in distinguishing the signals of multiple sequences caused by the influence of a channel(s) can also be avoided.

Here, in practical applications, the rule may be pre-defined, or may be issued to the terminal by the network side in advance, which is not limited in the embodiments of the disclosure.

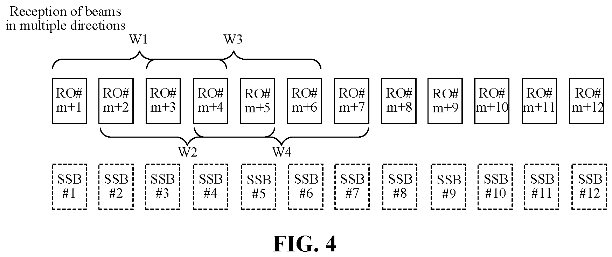

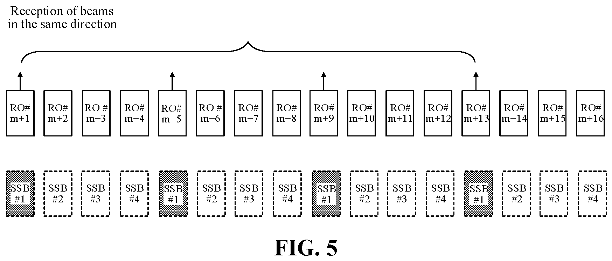

In practical applications, the at least two occasions are consecutive, so that the difficulty in detecting the preamble(s) can be reduced for the network side. Here, these consecutive occasions may be occasions corresponding to the same identifiers of signals at least used for synchronization, or may be occasions corresponding to the different identifiers of signals at least used for synchronization. In practical applications, whether these consecutive occasions are occasions corresponding to the same identifiers of signals at least used for synchronization, or occasions corresponding to the different identifiers of signals at least used for synchronization depends on a PRACH transmission mechanism(s) supported by the network side, that is, a beam for transmitting a PRACH supported by the network side (which may also be understood as a transmission direction, or a direction, or a transmission configuration or spatial filtering). Specifically, when the network side supports multi-beam transmission, these consecutive occasions may be occasions corresponding to the different identifiers of signals at least used for synchronization; and when the network side supports single-beam (i.e., the same beam) transmission, these consecutive occasions may be occasions corresponding to the same identifiers of signals at least used for synchronization. Exemplarily, assuming that the network side supports transmission on Q (Q is an integer greater than or equal to 2) beams, such as transmission on 4 beams, the base station may perform combination on Q consecutive ROs, and each RO may correspond to a different SSB index. As illustrated in FIG. 4, the network side may perform reception of uplink PRACHs (i.e., preambles) on four ROs, and the four ROs are associated with different SSB indexes. The network side may combine the PRACHs received on the four ROs such as m+1 to m+4 as needed (which may also be referred to as joint reception or joint detection). The PRACHs may also be combined on four ROs of m+2 to m+5. That is to say, the network side may combine PRACHs on ROm and subsequent Q-1 ROs and consider the PRACHs as multiple transmissions from the same user. When the network side supports transmission on the same beam, that is, when the consecutive occasions correspond to the same identifiers of signals at least used for synchronization, as illustrated in FIG. 5, four ROs correspond to one SSB index, the network side may combine the PRACHs received on the four ROs (m+1, m+5, m+9, m+13) corresponding to SSB#1 and consider the PRACHs as multiple transmissions from the same user. That is to say, the at least two consecutive occasions include: an occasion associated with a certain SSB index, a next occasion associated with the same SSB index, and subsequent occasion(s) associated with the same SSB index; namely, these occasions compose the at least two occasions.

Here, in practical applications, the network side may indicate the terminal of a PRACH transmission mechanism supported by the network side, and the terminal may transmit at least two preambles on at least two occasions using the PRACH transmission mechanism indicated by the network side.

In an embodiment, in a case that the first information indicates at least the first resource set, the at least two occasions have different time-domain resources, or the at least two occasions have a same time-domain resource and different frequency-domain resources. Frequency-domain resources of the at least two occasions have an association relationship with each other.

Specifically, when the at least two occasions operate only on different time-domain resources or only on different frequency-domain resources, the terminal may transmit at least two same or different preambles. When the at least two occasions only operate on different time-domain resources, the time-domain resources of the at least two occasions have an association relationship with each other; and when the at least two occasions operate only on different frequency-domain resources, the frequency-domain resources of the at least two occasions have an association relationship with each other; thus the network side can learn that these preambles are from the same terminal.

When the at least two occasions are at the same time resource (for example, the at least two occasions are in one time instance) and are distributed on multiple different frequency-domain resources, namely when msg1-FDM (the number of PRACH transmission occasions frequency-division multiplexed (FDMed) in one time instance), namely the number of resources (also referred to as the number of random access transmission occasions) that can be frequency-division multiplexed in the same time resource or the same instance, is not equal to 1, the network side can configure multiple different occasion resources in the frequency domain to have an association relationship with each other. At least two same preambles can be transmitted on the different occasion resources having an association relationship with each other, then the network side can learn that the preambles are from the same terminal, and then can use the detection results of these preambles to carry out joint processing to improve the coverage capability of random access (i.e., a PRACH). The transmission of the same sequence on multiple occasions can reduce the probability of collision between the uplink random access of the multi-panel terminal and that of other terminals. At least two different preambles may also be transmitted on different occasion resources having an associated relationship with each other, and different preambles may be transmitted on different occasions. Exemplarily, assuming that there are two ROs: RO 1 and RO 2, RO 1 is distributed on a first frequency-domain resource, RO 2 is distributed on a second frequency-domain resource, and the two preambles are P1 and P2 respectively, then P1 is transmitted on the first frequency-domain resource, and P2 is transmitted on the second frequency-domain resource. Selecting different preamble sequences can reduce the change of sequence correlation caused by factors such as channel fluctuations, thus reducing the performance of cross-correlation with other sequences. Using the diversity gain brought by different sequences can reduce the probability of false detection or detection failure.

For the multi-panel terminal, the frequency-domain resource position of an occasion is:

$$f(n) = \frac{FDM}{N} * n + offset$$

Here, $N$ denotes the number of preambles transmitted simultaneously or the number of panels of the terminal. *offset* denotes an offset with a value of $0 \sim N\text{-}1$. *FDM* denotes a parameter of the occasion in the frequency domain. *FDM* may have a value of 1, 2, 4, or 8. n denotes a serial number corresponding to a panel or a serial number sent for multiple times $0 \sim N\text{-}1$. f($n$) denotes the frequency-domain resource position for the corresponding transmission.

Exemplarily, assuming that $N$=2 and *FDM*= 4 (indicating that there may be 4 RACH occasions in a same time instance), then offset = 0 or 1. The frequency-domain positions where the two panels can transmit preambles are {frequency-domain resource position 0, frequency-domain resource position 2} or {frequency-domain resource position 1, frequency-domain resource position 3}. Assuming that $N$= 2 and *FDM* = 8, then the offset may be 0 to 3, and the frequency-domain positions corresponding to the two panels may be {0, 4}, {1, 5}, {2, 6}, or {3, 7}. Since the terminal has two panels, transmission may be performed at two frequency-domain positions simultaneously, and the transmitted preambles may be the same or different. For 4 resources and 2 panels, 2 pairs of resources can be supported correspondingly; that is, the offset may be 0 or 1. When two frequency-domain resources have a certain distance from each other, namely being spaced apart, there may be a certain frequency diversity gain. That is, some frequency-domain position may have a better response property.

In an embodiment, in a case that the first information indicates at least the second resource set, the at least two preambles transmitted on one occasion may be the same or different. When the at least two preambles are different, the at least two preambles transmitted on the one occasion have an association relationship with each other, thus the difficulty in detecting the preambles can be reduced for the network side. The association relationship can characterize that the at least two different preambles are from one terminal.

Here, when the at least two preambles transmitted on the one occasion are the same, the number of preamble transmissions does not exceed the number of preamble transmissions indicated by the first information.

Exemplarily, assuming that the terminal uses a preamble 1, and the first information indicates that the number of transmissions of the preamble 1 is M, if the terminal transmits the preamble 1 for O times on one occasion, O must be less than or equal to M. M and O are both integers greater than zero.

When the at least two preambles transmitted on the one occasion are different, in selecting preambles, the terminal may firstly select a preamble from the second resource set, and then select another preamble according to a rule. The selected another preamble may or may not be a preamble in the second resource set.

Based on this, in an embodiment, the terminal selects a first preamble from the second resource set, and selects a second preamble based on the rule. The second preamble may be a preamble in the second resource set, namely, the terminal selects the second preamble from the second resource set based on the rule; and the second preamble may not be a preamble in the second resource set. Exemplarily, similar to the third and fourth preambles above, the rule may be a $k^{th}$ sequence of multiple preambles (i.e., the $k^{th}$ preamble) $P(k) = P1 + N_k$, or $P(k) = P(k-1) + N'_k$. P1 denotes a first sequence number or sequence index among the multiple preambles, that is, the third preamble. $N_k$ denotes the offset between the $k^{th}$ sequence and the first sequence. $P(k-1)$ denotes the $(k-1)^{th}$ sequence number or sequence index among the multiple preambles. $N'_k$ denotes the offset between the $k^{th}$ sequence and the $(k-1)^{th}$ sequence. By selecting the $N_k$ and $N'_k$, there may be better non-correlation among the k sequences. As such, on one hand, the correlation among the k sequences can be reduced, reducing the interference between the sequences and improving the detection probability; on the other hand, the difficulty in distinguishing the signals of multiple sequences caused by the influence of a channel(s) can also be avoided.

When transmitting at least two different preambles, the number of transmissions of each preamble does not exceed the indicated number of preamble transmissions. Exemplarily, assuming that the terminal uses a preamble 3 and a preamble 4, and the first information indicates that the numbers of transmissions of the preamble 3 and the preamble 4 are both P, the number of times that the terminal transmits the preamble 3 cannot exceed P, and the number of times that the terminal transmits the preamble 4 cannot exceed P. P is an integer greater than zero.

In the embodiments of the disclosure, the association relationship may also be referred to as a correspondence relationship or a mapping relationship, which is not limited in the embodiments of the disclosure, as long as the function(s) thereof is realized. The at least two preambles are associated with one terminal, which may also be understood that the at least two preambles transmitted are from one terminal. That is, these preambles are from the same terminal instead of multiple terminals. It may also be said that these preambles can be used jointly, namely combined. Due to the existence of the association relationship, after detecting a preamble sequence, the network side may consider that the terminal also transmits other preamble(s) associated with the preamble sequence, thereby reducing the difficulty in detecting multiple preamble sequences for the network side.

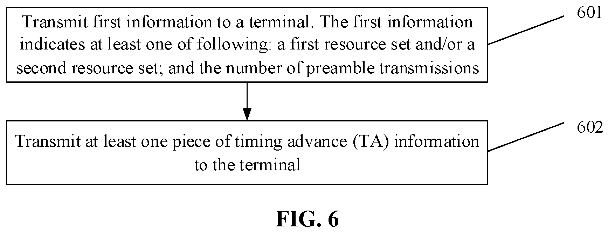

Correspondingly, embodiments of the disclosure further provide a method for random access, applied to a network device (which may specifically be a base station). As illustrated in FIG. 6, the method includes following.

Step 601: first information is transmitted to a terminal. The first information indicates at least one of following:

a first resource set and/or a second resource set; and a number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

After the first information is transmitted to the terminal, a random access procedure may be performed with the terminal.

On this basis, in an embodiment, as illustrated in FIG. 6, the method may further include following.

Step 602: at least one piece of timing advance (TA) information is transmitted to the terminal.

In practical applications, the network device may transmit the at least one piece of TA information to the terminal through a message 2 (msg 2) or a message B (msg B).

In an embodiment, in a case that the first information indicates at least the first resource set, at least two preambles are received on at least two occasions. The at least two different preambles received on the at least two occasions have an association relationship with each other. The association relationship enables the network device to learn that the at least two different preambles are preambles from the same terminal, and the network device combines results of the at least two different preambles.

In an embodiment, in a case that the first information indicates at least the second resource set, at least two preambles are received on one occasion. The at least two preambles received on the one occasion have an association relationship with each other, and the association relationship enables the network device to learn that the at least two preambles are preambles from the same terminal, and the network device combines results of the at least two different preambles.

Exemplarily, combining results of different preambles may include:

an operation of combining correlation peaks of the at least two different preambles (which may also be referred to as superimposing the energy of the correlation peaks) to obtain a new detection value, and judging whether the new detection value meets a threshold requirement. When the new detection value exceeds the threshold requirement, the network device considers that the preamble signals have been correctly received (i.e., an access request sent by the terminal has been received). The probability of uplink random access of the terminal can be improved based on combining the correlation peaks of P1 and P2.

Here, it is to be noted that the specific implementation of the combining operation is not limited in the embodiments of the disclosure.

In practical applications, when the terminal is a terminal has at least two panels, at least two panels are used to transmit preambles respectively, and the transmitted preambles are different, the network device may determine that at least two TAs need to be used for uplink transmission if the network device determines that a propagation delay difference between the preambles reaching the network device and transmitted by the panels respectively is greater than a certain threshold (which may be set as needed).

That is to say, the network device may determine, based on the at least two preambles received, that at least two pieces of TA information need to be used. Each piece of TA information corresponds to uplink transmission of a respective beam. From the perspective of the terminal, each beam is on a respective panel. Here, the beam may be understood as a transmission direction, or a direction, a transmission configuration, or spatial filtering. Further, as described above, the terminal may determine that at least two pieces of TA information need to be used, and then send a request of using at least two pieces of TA information (that is, transmitting different preambles using multiple panels) to the network device. When receiving the request from the terminal, the network device determines that at least two pieces of TA information need to be used. Each piece of TA information corresponds to a respective panel. Exemplarily, when the at least two pieces of TA information are fed back, the order of the at least two pieces of TA information may be indicated according to a predefined order. Assuming that the terminal has a panel 1 and a panel 2, the panel 1 is the main panel of the terminal and transmits the preamble P1. The panel 2 transmits the preamble P2, and P2 = P1 + N. The network device transmits TA 1 and TA 2 and the order is firstly TA1 and then TA 2, then the panel 1 uses TA1 as an uplink TA, and the panel 2 uses TA 2 as an uplink TA.

For a multi-panel terminal, when the network device determines to use one TA for uplink transmission, an additional energy gain and a spatial diversity gain of beams can be obtained when the network device receives multiple same preambles, and a spatial diversity gain and a power gain can be obtained when the network device receives multiple different preambles. There are more detection opportunities than an ordinary terminal. When the terminal determines to use at least two TAs for uplink transmission, detection opportunities can be increased when the network device receives multiple same preambles. In this case, the network device can only select a preamble of one panel for the detection of uplink random access. When the network device receives multiple different preambles, the network device can learn that the multiple preambles are transmitted by one terminal and correspond to multiple panels, and thus can be combined to improve detection probability; and multiple uplink TAs can be obtained additionally.

In the embodiments of the disclosure, the network device can determine, according to the first resource set or the second resource set used by the terminal, that the terminal has the capability of performing uplink random access on multiple panels, thereby distinguishing the terminal having multiple panels from an ordinary terminal, and further reducing the complexity of demodulation for the network device.

As can be understood from the above description, according to the scheme provided by the embodiments of the disclosure, for a multi-panel terminal, multiple same or different preambles can be transmitted on multiple panels; thus, the coverage of the multi-panel PRACH can be improved, and the random access capability of the new terminal type can be supported.

In the method of the embodiments of the disclosure, a terminal acquires first information. The first information indicates at least one of following: a first resource set and/or a second resource set; and the number of preamble transmissions. The first resource set is used for the terminal to transmit at least two preambles on at least two occasions. The at least two preambles transmitted on the at least two occasions are associated with one terminal. The second resource set is used for the terminal to transmit at least two preambles on one occasion. The at least two preambles transmitted on the one occasion are associated with one terminal. In the scheme according to the embodiments of the disclosure, the terminal obtains indication information, and the network side can learn that multiple preambles transmitted by the terminal are from the same user according to the indication information; as such, since one terminal transmits multiple preambles, the coverage capability of a PRACH is improved (namely the random access capability of the PRACH is improved), the access success rate of the terminal is improved, and the access delay is shortened.

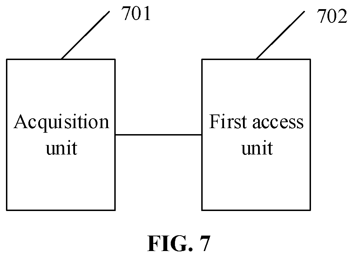

In order to implement the method of the terminal side according to the embodiments of the disclosure, the embodiments of the disclosure further provide an apparatus for random access, provided on a terminal. As illustrated in FIG. 7, the apparatus includes an acquisition unit 701.

The acquisition unit 701 is configured to acquire first information. The first information indicates at least one of following: a first resource set and/or a second resource set; and the number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

In an embodiment, the acquisition unit 701 is configured to receive the first information sent from the network side.

In an embodiment, as illustrated in FIG. 7, the apparatus may further include a first access unit 702. The first access unit 702 is configured to perform a random access procedure.

In an embodiment, the first access unit 702 is configured to perform the random access procedure using the first information.

In an embodiment, the first access unit 702 is configured to receive second information sent from a network side. The second information includes at least one piece of timing advance (TA) information.

In an embodiment, the first access unit 702 is configured to transmit preamble(s) using the first information.

In an embodiment, the first access unit 702 is configured to: select a first preamble from the second resource set; and select a second preamble based on a rule.

In an embodiment, the first access unit 702 is configured to: select a third preamble from the first resource set; and select a fourth preamble based on a rule.

In practical applications, the acquisition unit 701 and the first access unit 702 may be implemented by a processor in a measurement device in combination with a communication interface.

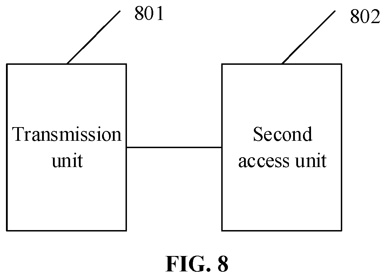

In order to implement the method of the network device side of the embodiments of the disclosure, the embodiments of the disclosure further provide an apparatus for random access, arranged on a network device. As illustrated in FIG. 8, the apparatus includes a transmission unit 801.

The transmission unit 801 is configured to transmit first information to a terminal. The first information indicates at least one of following: a first resource set and/or a second resource set; and the number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

In an embodiment, as illustrated in FIG. 8, the apparatus may further include a second access unit 802.

The second access unit 802 is configured to transmit at least one piece of TA information to the terminal.

In an embodiment, in a case that the first information indicates at least the first resource set, the second access unit 802 receives at least two preambles on at least two occasions. The at least two preambles received on the at least two occasions are same or different.

In an embodiment, in a case that the first information indicates at least the second resource set, the second access unit 802 receives at least two preambles on one occasion. The at least two preambles received on the one occasion have an association relationship with each other.

In an embodiment, the second access unit 802 is configured to determine, based on the at least two preambles received, that at least two pieces of TA information are needed to be used. Each piece of TA information corresponds to uplink transmission of a respective beam.

In practical applications, the transmission unit 801 may be implemented by a communication interface in the apparatus for random access, and the second access unit 802 may be implemented by a processor in combination with a communication interface in the apparatus for random access.

It is to be noted that for the above apparatus for random access according to the embodiments, the division of the program modules above is used as an example for description of the communication only. In practical applications, the processing may be allocated to and accomplished by different program modules according to demands. Namely, the inner structure of the apparatus may be divided into different program modules to accomplish all or part of the processing described above. Additionally, the above apparatus for random access according to the embodiments belong to the same concept as the method for random access, and details of the particular implementation process of the apparatus may refer to the method embodiments, which will not be described here again.

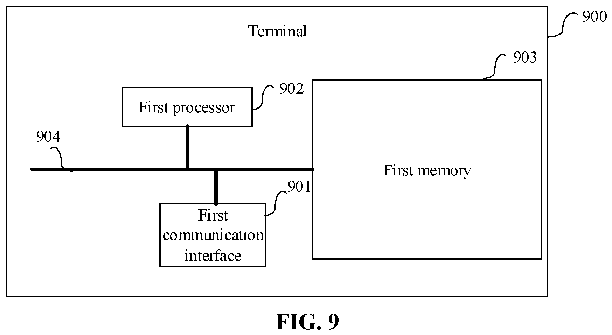

Based on the hardware implementation of the above program modules, and in order to implement the method of the terminal side according to the embodiments of the disclosure, the embodiments of the disclosure further provide a terminal. As illustrated in FIG. 9, the terminal 900 includes a first communication interface 901, a first processor 902 and a first memory 903.

The first communication interface 901 is capable of information exchange with a network device.

The first processor 902 is connected to the first communication interface 901 to realize information exchange with the network and is configured to execute the method provided by the above one or more technical solutions of the terminal side when running a computer program.

The first memory 903 has the computer program stored thereon.

Specifically, the first processor 902 is configured to acquire first information. The first information indicates at least one of following: a first resource set and/or a second resource set; and the number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

In an embodiment, the first processor 902 is configured to receive the first information sent from the network side through the first communication interface901.

In an embodiment, the first processor 902 is configured to perform a random access procedure through the first communication interface 901.

In an embodiment, the first processor 902 is configured to perform a random access procedure using the first information.

In an embodiment, the first communication interface 901 is configured to receive second information sent from a network side. The second information includes at least one piece of timing advance (TA) information.

In an embodiment, the first processor 902 is configured to transmit preamble(s) using the first information through the first communication interface 901.

In an embodiment, the first processor 902 is configured to: select a first preamble from the second resource set, and select a second preamble based on a rule.

In an embodiment, the first processor 902 is configured to: select a third preamble from the first resource set, and select a fourth preamble based on a rule.

It is to be noted that the specific processing procedures of the first processor 902 and the first communication interface 901 may be understood with reference to the above method.

Of course, in practical applications, various components in the terminal 900 are coupled together through a bus system 904. It may be understood that the bus system 904 is configured to realize the connection and communication between the components. Besides a data bus, the bus system 904 further includes a power bus, a control bus and a state signal bus. However, for clarity of description, the buses are all signed as the bus system 904 in FIG. 9.

The first memory 903 in the embodiments of the disclosure is configured to store various types of data to support the operations of the terminal 900. Examples of such data include any computer program for operations on terminal 900.

The method disclosed in above embodiments of the disclosure may be applied to the first processor 902, or may be implemented by the first processor 902. The first processor 902 may be an integrated circuit chip, and has the capability of signal processing. During implementation, the various steps of in the above method may be completed by an integrated logic circuit in hardware form or instructions in software form in the first processor 902. The above first processor 902 may be a general-purpose processor, a digital signal processor (DSP), or other programmable logic devices, discrete gates or transistor logic devices, discrete hardware components and so on. The first processor 902 may implement or perform the various methods, steps or logic blocks disclosed in the embodiments of the disclosure. The universal processor may be a microprocessor or any conventional processor and the like. The steps of the methods disclosed in combination with the embodiments of the disclosure may be directly embodied as being performed and completed by a hardware decoding processor, or being performed and completed by a combination of hardware and software modules in a decoding processor. The soft modules may be located in a storage medium. The storage medium is located in the first memory 903, and the first processor 902 reads information from the first memory 903 and implement steps of the above methods in combination with the hardware.

In an exemplary embodiment, the terminal 900 may be implemented by one or more Application Specific Integrated Circuit (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), Microprocessors, or other electronic elements, to execute the method above.

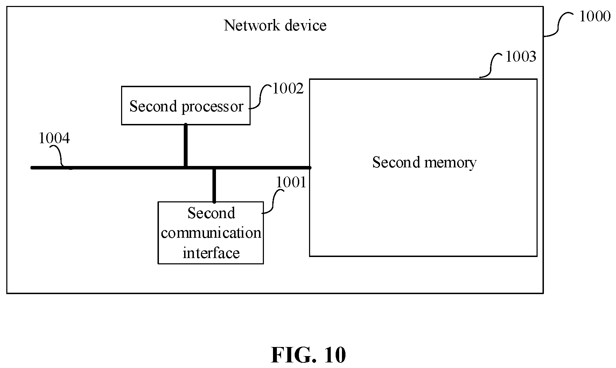

Based on the hardware implementation of the above program modules, and in order to implement the method of the network device side according to the embodiments of the disclosure, the embodiments of the disclosure further provide a network device. As illustrated in FIG. 10, the network device 1000 includes a second communication interface 1001, a second processor 1002 and a second memory 1003.

The second communication interface 1001 is capable of information exchange with a terminal.

The second processor 1002 is connected to the second communication interface 1001 to realize information exchange with the terminal, and is configured to execute the method provided by the above one or more technical solutions of the network device side when running a computer program.

The second memory 1003 has the computer program stored thereon.

Specifically, the second communication interface 1001 is configured to transmit first information to a terminal. The first information indicates at least one of following: a first resource set and/or a second resource set; and the number of preamble transmissions. The first resource set is used for the terminal to transmit at least two preambles on at least two occasions, and the at least two preambles transmitted on the at least two occasions are associated with one terminal. The second resource set is used for the terminal to transmit at least two preambles on one occasion, and the at least two preambles transmitted on the one occasion are associated with one terminal.

In an embodiment, the second communication interface 1001 is configured to transmit at least one piece of timing advance (TA) information to a network device.

In an embodiment, in a case that the first information indicates at least the first resource set, the second communication interface 1001 receives at least two preambles on at least two occasions. The at least two preambles received on the at least two occasions are same or different.

In an embodiment, in a case that the first information indicates at least the second resource set, the second communication interface 1001 receives at least two preambles on one occasion. The at least two preambles received on the one occasion are associated with each other.

In an embodiment, the second processor 1002 is configured to: determine, based on the at least two preambles received, that at least two pieces of TA information are needed to be used. Each piece of TA information corresponds to uplink transmission of a respective beam.

It is to be noted that the specific processing procedures of the second processor 1002 and the second communication interface 1001 may be understood with reference to the above method.

Of course, in practical applications, various components in the network device 1000 are coupled together through a bus system 1004. It may be understood that the bus system 1004 is configured to realize the connection and communication between the components. Besides a data bus, the bus system 1004 further includes a power bus, a control bus and a state signal bus. However, for clarity of description, the buses are all signed as the bus system 1004 in FIG. 10.

The second memory 1003 in the embodiments of the disclosure is configured to store various types of data to support the operations of the network device 1000. Examples of such data include any computer program for operations on the network device 1000.

The method disclosed in above embodiments of the disclosure may be applied to the second processor 1002, or may be implemented by the second processor 1002. The second processor 1002 may be an integrated circuit chip, and has the capability of signal processing. During implementation, the various steps of in the above method may be completed by an integrated logic circuit in hardware form or instructions in software form in the second processor 1002. The above second processor 1002 may be a general-purpose processor, a digital signal processor (DSP), or other programmable logic devices, discrete gates or transistor logic devices, discrete hardware components and so on. The second processor 1002 may implement or perform the various methods, steps or logic blocks disclosed in the embodiments of the disclosure. The universal processor may be a microprocessor or any conventional processor and the like. The steps of the methods disclosed in combination with the embodiments of the disclosure may be directly embodied as being performed and completed by a hardware decoding processor, or being performed and completed by a combination of hardware and software modules in a decoding processor. The soft modules may be located in a storage medium. The storage medium is located in the second memory 1003, and the second processor 1002 reads information from the second memory 1003 and implement steps of the above methods in combination with the hardware.

In an exemplary embodiment, the network device 1000 may be implemented by one or more Application Specific Integrated Circuit (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), Microprocessors, or other electronic elements, to execute the method above.

It may be understood that the memories (the first memory 903 and the second memory 1003) in the embodiments of the disclosure may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM) an Electrically Erasable Programmable Read-Only Memory (EEPROM), a Ferromagnetic Random Access Memory (FRAM), a Flash Memory, a magnetic surface memory, an optical disc, or a compact disk read only memory (CD-ROM), or may be a device containing one or a combination of those memories. The magnetic surface memory may be a hard disk memory or a tape memory. The volatile memory may be a random access memory (RAM), that is used as an external cache. By way of example but not limiting, many forms of RAMs are usable, for example a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in the embodiments of the disclosure is intended to include but not limited to memories of these and any other suitable types.

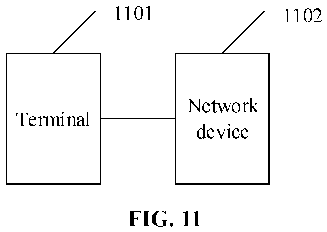

Embodiments of the disclosure further provide a system for random access. As illustrated in FIG. 11, the communication system includes a terminal 1101 and a network device 1102.

Here, it is to be noted that the specific processing procedures of the terminal 1101 and the network device 1102 have been described in detail above, and will not be repeated here.

In an exemplary embodiment, embodiments of the disclosure further provide a storage medium, namely a computer storage medium, in particular, a computer-readable storage medium. The computer-readable storage medium may for example be the first memory 903 including a computer program. The computer program may be executed by the first processor 902 of the terminal 900, to accomplish the steps of the above method of the terminal side. The computer-readable storage medium may for another example be the memory 1003 including a computer program. The computer program may be executed by the second processor 1002 of the network device 1000, to accomplish the steps of the above method of the network device side. The computer-readable storage medium may be such as a ferroelectroc random access memory (FRAM), a read-only memory (ROM), a programmable read-only memory (PROM), an electrically programmable read-only memory (EPROM), an electrically erasable programmable read-only memory (EEPROM), a flash drive, a magnetic surface memory, an optical disc, or a compact disk read only memory (CD-ROM).

It should be noted that "first", "second", etc. are used to distinguish similar objects, and do not necessarily describe a specific sequence or ranking order.

Additionally, the technical solutions disclosed herein may be arbitrarily without conflict.

Described above are merely preferred embodiments of the disclosure, and are not used to limit the scope of protection of the disclosure.

**Claims**

1. A method for random access, applied to a terminal and comprising:
   acquiring first information, wherein the first information indicates at least one of following:

   a first resource set and/or a second resource set, wherein the first resource set is used for the terminal to transmit at least two preambles on at least two occasions, and the at least two preambles transmitted on the at least two occasions are associated with one terminal; and the second resource set is used for the terminal to transmit at least two preambles on one occasion, and the at least two preambles transmitted on the one occasion are associated with one terminal; and
   a number of preamble transmissions.

2. The method of claim 1, wherein acquiring the first information comprises:
   receiving the first information transmitted from a network side.

3. The method of claim 1, further comprising:
   receiving second information transmitted from a network side, wherein the second information comprises at least one piece of timing advance (TA) information.

4. The method of claim 1, wherein in a case that the first information indicates at least the first resource set, the at least two preambles transmitted on the at least two occasions are same or different.

5. The method of claim 1, wherein in a case that the first information indicates at least the first resource set and the number of preamble transmissions, when the at least two preambles transmitted are same, a number of preamble transmissions does not exceed the indicated number of preamble transmissions; or in the case that the first information indicates at least the first resource set and the number of preamble transmissions, when the at least two preambles transmitted are different, a number of transmissions of each preamble does not exceed the indicated number of preamble transmissions.

6. The method of claim 1, wherein in a case that the first information indicates at least the first resource set, the at least two occasions are consecutive.

7. The method of claim 1, wherein in a case that the first information indicates at least the first resource set and the at least two preambles transmitted are different, the at least two preambles transmitted on the at least two occasions have an association relationship with each other.

8. The method of claim 1, wherein in a case that the first information indicates at least the first resource set, time-domain resources or frequency-domain resources of the at least two occasions are different, or, time-domain resources of the at least two occasions are same and frequency-domain resources of the at least two occasions are different; wherein resources of the at least two occasions have an association relationship with each other.

9. The method of claim 1, wherein in a case that the first information indicates at least the second resource set, the at least two preambles transmitted on the one occasion have an association relationship with each other.

10. The method of claim 9, further comprising:

    selecting a first preamble from the second resource set; and
    selecting a second preamble based on a rule.

11. The method of claim 1, wherein in a case that the first information indicates the second resource set and the number of preamble transmissions, a number of transmissions of each preamble does not exceed the indicated number of preamble transmissions.

12. The method of any one of claims 1 to 11, wherein the occasion(s) has a correspondence relationship with identifier(s) of signal(s) at least used for synchronization.

13. A method for random access, applied to a network device and comprising:
transmitting first information to a terminal, wherein the first information indicates at least one of following:

a first resource set and/or a second resource set, wherein the first resource set is used for the terminal to transmit at least two preambles on at least two occasions, and the at least two preambles transmitted on the at least two occasions are associated with one terminal; and the second resource set is used for the terminal to transmit at least two preambles on one occasion, and the at least two preambles transmitted on the one occasion are associated with one terminal; and
a number of preamble transmissions.

14. The method of claim 13, further comprising:
transmitting second information to the terminal, wherein the second information comprises at least one piece of timing advance (TA) information.

15. The method of claim 13, further comprising: in a case that the first information indicates at least the first resource set, receiving at least two preambles on at least two occasions, wherein the at least two preambles received on the at least two occasions are same or different.

16. The method of claim 13, wherein in a case that the first information indicates at least the first resource set, the at least two occasions are consecutive.

17. The method of claim 13, further comprising: in a case that the first information indicates at least the first resource set, receiving at least two preambles on at least two occasions, wherein at least two different preambles received on at least two occasions have an association relationship with each other.

18. The method of claim 13, wherein in a case that the first information indicates at least the first resource set, time-domain resources or frequency-domain resources of the at least two occasions are different, or, time-domain resources of the at least two occasions are same and frequency-domain resources of the at least two occasions are different; wherein resources of the at least two occasions have an association relationship with each other.

19. The method of claim 13, wherein in a case that the first information indicates at least the second resource set, receiving at least two preambles on one occasion, wherein the at least two preambles received on the one occasion have an association relationship with each other.

20. The method of claim 19, wherein,
determining, based on the at least two preambles received, that at least two pieces of TA information are needed to be used, wherein each piece of TA information corresponds to uplink transmission of a respective beam.

21. The method of any one of claims 13 to 20, wherein the occasion(s) corresponds to identifier(s) of signal(s) at least used for synchronization.

22. An apparatus for random access, arranged in a terminal and comprising:
an acquisition unit, configured to acquire first information, wherein the first information indicates at least one of following:

a first resource set and/or a second resource set, wherein the first resource set is used for the terminal to transmit at least two preambles on at least two occasions, and the at least two preambles transmitted on the at least two occasions are associated with one terminal; and the second resource set is used for the terminal to transmit at least two preambles on one occasion, and the at least two preambles transmitted on the one occasion are associated with one terminal; and
a number of preamble transmissions.

23. An apparatus for random access, arranged in a network device and comprising:
a transmission unit, configured to transmit first information to a terminal, wherein the first information indicates at least one of following:

a first resource set and/or a second resource set, wherein the first resource set is used for the terminal to transmit at least two preambles on at least two occasions, and the at least two preambles transmitted on the at least two occasions are associated with one terminal; and the second resource set is used for the terminal to transmit at least two preambles on one occasion, the at least two preambles transmitted on the one occasion are associated with one terminal; and

a number of preamble transmissions.

24. A terminal, comprising a first processor and a first communication interface, wherein:
the first processor is configured to acquire first information, wherein the first information indicates at least one of following:

a first resource set and/or a second resource set, wherein the first resource set is used for the terminal to transmit at least two preambles on at least two occasions, and the at least two preambles transmitted on the at least two occasions are associated with one terminal; and the second resource set is used for the terminal to transmit at least two preambles on one occasion, and the at least two preambles transmitted on the one occasion are associated with one terminal; and
a number of preamble transmissions.

25. A network device, comprising a second processor and a second communication interface, wherein:
the second communication interface is configured to transmit first information to a terminal, wherein the first information indicates at least one of following:

a first resource set and/or a second resource set, wherein the first resource set is used for the terminal to transmit at least two preambles on at least two occasions, and the at least two preambles transmitted on the at least two occasions are associated with one terminal; and the second resource set is used for the terminal to transmit at least two preambles on one occasion, and the at least two preambles transmitted on the one occasion are associated with one terminal; and
a number of preamble transmissions.

26. A terminal, comprising a first processor and a first memory configured to store a computer program capable of being run by the first processor;
wherein the first processor is configured to run the computer program to implement the steps of the method of any one of claims 1 to 12.

27. A network device, comprising a second processor and a second memory configured to store a computer program capable of being run by the second processor;
wherein the second processor is configured to run the computer program to implement the steps of the method of any one of claims 13 to 21.

28. A storage medium stored with a computer program, wherein the computer program, when executed by a processor, implements steps of the method of any one of claims 1 to 12, or implements steps of the method of any one of claims 13 to 21.

gNB

1.The gNB transmits SSB(s)
for downlink synchronization

UE

2.The UE transmits a PRACH for
uplink random access (namely Msg1).
The UE performs random access on an
RO corresponding to the detected SSB

3.Msg 2(RAR)

4.Msg 3

**FIG. 1**

Option 1, transmission to a
single base station or TRP

Option 2, transmission to
multiple base stations or TRPs

**FIG. 2**

Acquire first information. The first information indicates at least one of following: a first resource set and/or a second resource set; and the number of preamble transmissions ⌐ 301

Perform a random access procedure ⌐ 302

**FIG. 3**

Reception of beams
in multiple directions

W1        W3

| RO#<br>m+1 | RO#<br>m+2 | RO#<br>m+3 | RO#<br>m+4 | RO#<br>m+5 | RO#<br>m+6 | RO#<br>m+7 | RO#<br>m+8 | RO#<br>m+9 | RO#<br>m+10 | RO#<br>m+11 | RO#<br>m+12 |

W2      W4

| SSB<br>#1 | SSB<br>#2 | SSB<br>#3 | SSB<br>#4 | SSB<br>#5 | SSB<br>#6 | SSB<br>#7 | SSB<br>#8 | SSB<br>#9 | SSB<br>#10 | SSB<br>#11 | SSB<br>#12 |

**FIG. 4**

Reception of beams
in the same direction

| RO#<br>m+1 | RO#<br>m+2 | RO #<br>m+3 | RO#<br>m+4 | RO#<br>m+5 | RO #<br>m+6 | RO#<br>m+7 | RO#<br>m+8 | RO#<br>m+9 | RO#<br>m+10 | RO#<br>m+11 | RO#<br>m+12 | RO#<br>m+13 | RO#<br>m+14 | RO#<br>m+15 | RO#<br>m+16 |

| SSB<br>#1 | SSB<br>#2 | SSB<br>#3 | SSB<br>#4 | SSB<br>#1 | SSB<br>#2 | SSB<br>#3 | SSB<br>#4 | SSB<br>#1 | SSB<br>#2 | SSB<br>#3 | SSB<br>#4 | SSB<br>#1 | SSB<br>#2 | SSB<br>#3 | SSB<br>#4 |

**FIG. 5**

Transmit first information to a terminal. The first information indicates at least one of following: a first resource set and/or a second resource set; and the number of preamble transmissions — 601

Transmit at least one piece of timing advance (TA) information to the terminal — 602

**FIG. 6**

701

702

| Acquisition unit | First access unit |

**FIG. 7**

801

802

| Transmission unit | | Second access unit |

**FIG. 8**

**FIG. 9**

**FIG. 10**

1101

1102

Terminal

Network
device

**FIG. 11**

## INTERNATIONAL SEARCH REPORT

| International application No. |
| --- |
| **PCT/CN2023/124907** |

| **A.** | **CLASSIFICATION OF SUBJECT MATTER** |
| --- | --- |

H04W 74/00(2009.01)i

According to International Patent Classification (IPC) or to both national classification and IPC

| **B.** | **FIELDS SEARCHED** |
| --- | --- |

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT; ENTXT; WPABS; CNKI; 3GPP: 随机接入, 资源, 机会, 指示, 前导码, 重复, 传输, 两个, 多个, 次数, random access, resource, occasion, RO, notification, preamble, repeat, transmit, two, multi, times

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 108738159 A (POTEVIO INFORMATION TECHNOLOGY CO., LTD.) 02 November 2018 (2018-11-02) description, paragraphs [0021]-[0022] | 1, 2, 13 |
| Y | CN 108738159 A (POTEVIO INFORMATION TECHNOLOGY CO., LTD.) 02 November 2018 (2018-11-02) ditto | 3-12, 14-28 |
| Y | CN 112398620 A (HUAWEI TECHNOLOGIES CO., LTD.) 23 February 2021 (2021-02-23) description, paragraph [0127] | 1-28 |
| Y | CN 113747601 A (ZTE CORP.) 03 December 2021 (2021-12-03) description, paragraph [0069] | 1-28 |
| A | CN 110115095 A (BEIJING XIAOMI MOBILE SOFTWARE CO., LTD.) 09 August 2019 (2019-08-09) entire document | 1-28 |
| A | KR 1020210112373 A (VIVO MOBILE COMMUNICATION CO., LTD.) 14 September 2021 (2021-09-14) entire document | 1-28 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 January 2024** | **25 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/124907**

| Patent document cited in search report | | | Publication date (day/month/year) | Patent family member(s) | | | Publication date (day/month/year) |
|---|---|---|---|---|---|---|---|
| CN | 108738159 | A | 02 November 2018 | None | | | |
| CN | 112398620 | A | 23 February 2021 | None | | | |
| CN | 113747601 | A | 03 December 2021 | None | | | |
| CN | 110115095 | A | 09 August 2019 | WO | 2020191586 | A1 | 01 October 2020 |
| | | | | US | 2022132560 | A1 | 28 April 2022 |
| | | | | EP | 3952121 | A1 | 09 February 2022 |
| | | | | EP | 3952121 | A4 | 13 July 2022 |
| KR | 1020210112373 | A | 14 September 2021 | None | | | |

Form PCT/ISA/210 (patent family annex) (July 2022)

## REFERENCES CITED IN THE DESCRIPTION

### Patent documents cited in the description

- CN 202211350497